# EUROPÄISCHE PATENTSCHRIFT

(11) **EP 1 382 373 B1**
(45) Veröffentlichungstag und Bekanntmachung des Hinweises auf die Patenterteilung: **29.04.2009**
(21) Anmeldenummer: 03015105.4
(22) Anmeldetag: 03.07.2003
(51) Int. Cl.: B01D 39/16, D21H 13/10, A47J 31/08

(54) **Heisssiegelfähiges Filtermaterial**
Heat-sealable filter material
Matériau filtrant thermoscellable

(30) Priorität: 11.07.2002 DE 10231403
(43) Veröffentlichungstag der Anmeldung: 21.01.2004
(73) Patentinhaber: PAPIERFABRIK SCHOELLER & HOESCH GMBH & CO. KG, 76593 Gernsbach (DE)
(72) Erfinder: Le Brech, Yves, 29390 Scaer (FR); Heinrich, Günter, 76593 Gernsbach (DE); Kaussen, Manfred, Dr., 77833 Ottersweier (DE); Kuntz, Stefan, 76530 Baden-Baden (DE); Meger, Danny, 76593 Gernsbach (DE)
(74) Vertreter: Henkel, Feiler & Hänzel

(56) Entgegenhaltungen:
- EP-A- 0 286 734
- EP-A- 1 266 997
- DE-A- 10 051 186
- FR-A- 2 663 350

## Beschreibung

Die vorliegende Erfindung betrifft ein heißsiegelfähiges Filtermaterial mit ausgezeichneter Siegelnahtfestigkeit nach Heißversiegelung im trockenen und nassen Zustand, das mindestens eine nicht heißsiegelfähige Lage aus Fasermaterial und eine heißsiegelfähige zweite Lage aus synthetischem Material, die einen Haftvermittler enthält, umfasst.

Es ist bekannt, Tee oder anderes Füllgut in Beutel zu verpacken, die für den Gebrauch mit heißem Wasser aufgebrüht werden. Die zweite Lage aus heißsiegelfähigem synthetischem Material/heißsiegelfähigen synthetischen Fasern dient zum Verschließen des Beutels durch eine Heißversiegelung auf schnelllaufenden Abpackmaschinen. Als synthetisches Material/synthetische Fasern bieten sich beispielsweise Polypropylen, Polyethylen, Mischpolymerisate aus Polyvinylchlorid und Vinylacetat sowie verschiedene Polyester an.

Dieses Beutelmaterial kann in bekannter Art und Weise nach einem wetlaid Verfahren auf einer Papiermaschine, einem dry-laid Verfahren auf einer Vlieslegemaschine oder einem Schmelz-Blasverfahren(Melt-Blown) durch Ablage von Polymerfasern auf eine Trägerschicht hergestellt werden.

Die erste Lage des Materials hat im allgemeinen ein Flächengewicht von 8-40 g/m², vorzugsweise 10-20 g/m², die zweite Polymerfaserlage ein Flächengewicht von 1-15 g/m², vorzugsweise 1,5-10 g/m².

In der EP-A-0 380 127 wird ein heißsiegelfähiges Teebeutelpapier mit einem Flächengewicht von 10-15 g/m² beschrieben, welches zur Heißversiegelung mit Polymeren wie Polypropylen und/oder Polyethylen und/oder einem Mischpolymerisat aus Vinylchlorid und Vinylacetat versehen ist.

In der EP-A-0 656 224 wird ein Filtermaterial insbesondere zur Herstellung von Teebeuteln und Kaffeebeuteln bzw. Filtern mit einem Flächengewicht zwischen 8 und 40 g/m² beschrieben, bei welchem die heißsiegelfähige Lage aus Kunststofffasern besteht, bevorzugt aus Polypropylen oder Polyethylen, die in erwärmten Zustand auf die erste aus natürlichen Fasern bestehende Lage abgelegt wird.

Die aus dem Stand der Technik bekannten heißsiegelfähigen Filtermaterialien haben den Nachteil, dass die zum Verschließen mit Hilfe der Heißversiegelung gebildeten Siegelnähte für viele Anwendungen nicht ausreichend fest sind.

Sie öffnen sich zum Teil bereits auf der Abpackmaschine oder auch später beim Aufguß mit kochendem Wasser.

Dies ist zum einen darauf zurückzuführen, dass die Herstellung von gefüllten, heißversiegelten Teebeuteln auf schnelllaufenden Abpackautomaten mit einer Taktzeit von etwa 1000 Beutel pro Minute erfolgt.

Sogenannte Heißsiegelwalzen versiegeln im allgemeinen in der Taktzeit von weniger als 0,1 Sekunde den Beutel bei einer Temperatur von 150-230 °C. Bei diesen kurzen Taktzeiten müssen die ausgeführten Siegelnähte fest geschlossen sein, damit kein Füllgut austreten kann. Dies ist jedoch häufig nicht der Fall.

Zum anderen ist die nicht ausreichende Festigkeit der Siegelnähte häufig dadurch bedingt, dass die Form der Teebeutel den Ansprüchen der Verbraucher angepasst wird, wobei gegenwärtig eine runde Ausführungsform mehr und mehr Interesse findet. Dieser runde Teebeutel besitzt bei gleicher Füllmenge eine etwa um die Hälfte verkleinerte Siegelnahtbreite gegenüber dem herkömmlichen rechteckigen Beutel, wodurch die Gefahr des Öffnens erhöht wird.

Versuche, die Siegelnahtfestigkeit dadurch zu erhöhen, dass der Anteil der zur Verfügung stehenden Heißsiegelfasern auf über 50%, bezogen auf das Gesamtflächengewicht des Filtermaterials, erhöht wird, bedingen eine Verringerung der mechanischen Eigenschaften, wie der Festigkeit und Steifigkeit des Filtermaterials. Ferner werden durch die Erhöhung des Anteils an heißsiegelfähigen Polymerfasern die Barriereeigenschaften des Filtermaterials erhöht, was zu einer deutlichen Reduzierung der Teeauslaugung führt. Da diese Eigenschaften jedoch für einen reibungslosen Abpackprozess notwendig sind, führt dieses Vorgehen nicht zu einem Filtermaterial mit ausgezeichneter Heißsiegelfähigkeit und guter Siegelnahtfestigkeit im trockenen und nassen Zustand.

Aufgabe der vorliegenden Erfindung war es deshalb, ein Filtermaterial mit ausgezeichneter Heißsiegelfähigkeit und guter Siegelnahtfestigkeit im trockenen und nassen Zustand, das die oben erwähnten Nachteile des Standes der Technik überwindet, zu schaffen.

Außerdem soll ein Verfahren zur Herstellung derartiger Filtermaterialien beschrieben werden.

Überraschenderweise wurde nun festgestellt, dass unter Mitverwendung eines Haftvermittlers heißsiegelfähige Filtermaterialien bereitgestellt werden können, die ausgezeichnete Eigenschaften bezüglich Heißsiegelfähigkeit und Siegelnahtfestigkeit liefern.

Gegenstand der vorliegenden Erfindung ist somit das Filtermaterial gemäß Anspruch 1, die Verfahren gemäß Ansprüchen 7 und 9 sowie die Verwendung gemäß Anspruch 10..

Durch die Mitverwendung eines Haftvermittlers in der heißsiegelfähigen, Fasern aus synthetischem Material umfassenden Lage wird dem erfindungsgemäßen Filtermaterial die Eigenschaft verliehen, dass unter Verwendung des erfindungsgemäßen Filtermaterials (wie oben beschrieben) mithilfe einer geeigneten Vorrichtung ausgebildete Heißsiegelnähte ausgezeichnet heißwasserstabil sind.

Unter dem Begriff "heißwasserstabil" wird hierbei eine Beständigkeit bzw. Unversehrtheit einer Heißsiegelnaht eines aus dem erfindungsgemäßen Filtermaterial hergestellten Filterbeutels im Laufe des Aufbrühvorgangs während 4 min verstanden.

Die Heißsiegelung des erfindungsgemäßen Filtermaterials kann in einer bevorzugten Ausführungsform durch Ultraschallbehandlung erfolgen.

Ohne an irgendeine Theorie gebunden werden zu wollen, gehen die Erfinder der vorliegenden Erfindung davon aus, dass durch die Mitverwendung eines Haftvermittlers die heißsiegelfähigen Fasern beim Ablegen auf der mindestens einen, ersten Lage nicht nur adhäsive Bindungen, sondern zusätzlich chemische Bindungen mit dem Fasermaterial der mindestens einen ersten nicht heißsiegelfähigen Lage eingehen. Dies führt zu einer Festigkeitserhöhung und ausgezeichneten Eigenschaften des erhaltenen Filtermaterials bezüglich Heißsiegelfähigkeit und Siegelnahtfestigkeit.

Der Haftvermittler ist in dem erfindungsgemäßen Filtermaterial üblicherweise in einer Menge von 2 bis 25 Gew.-%, zweckmäßigerweise 5 bis 20 Gew.-% und vorzugsweise 5 bis 15 Gew.-%, bezogen auf das Gewicht der mindestens einen zweiten, heißsiegelfähigen, Fasern aus synthetischem Material umfassenden Lage, vorhanden.

In einer Ausführungsform der vorliegenden Erfindung kann es sich bei den Ausgangsmaterialien für die mindestens eine, zweite, heißsiegelfähige, Fasern aus synthetischem Material umfassende Lage um Fasern aus gegebenenfalls natürlichen Fasern und biologisch abbaubaren thermoplastischen Polymeren handeln, wie sie beispielsweise in der DE 197 19 807 A1 oder der DE 102 06 926 A1 beschrieben sind.

In einer weiteren Ausführungsform der vorliegenden Erfindung kann es sich bei den Ausgangsmaterialien für die mindestens eine, zweite, heißsiegelfähige, Fasern aus synthetischen Material umfassende Lage um Fasern aus gegebenenfalls natürlichen Fasern und unpolaren, hydrophoben Polymeren beispielsweise aus Polyolefin, wie Polypropylen oder Polyethylen oder Gemischen hiervon, Vinylchlorid/Vinylacetat-Copolymer oder Polyester handeln.

Die erfindungsgemäßen Filtermaterialien enthalten neben der mindestens einen, zweiten, heißsiegelfähigen, Fasern aus synthetischem Material umfassenden Lage mindestens eine Lage aus Fasermaterial, bei dem es sich vorzugsweise um Naturfasern und/oder Cellulosederivatfasern handelt.

Diese Naturfasern und/oder Cellulosederivatfasern machen üblicherweise 50 bis 99,95 Gew.-%, bezogen auf das Papiergewicht der fertigen Filtermaterials, zweckmäßigerweise 65 bis 99,9 Gew.-% und vorzugsweise 80 bis 99,5 Gew.-% des Filtermaterials aus.

Bei den Naturfasern handelt es sich um die dem Fachmann auf dem einschlägigen Fachgebiet bekannten Naturfasern, wie Hanf, Manila, Jute, Sisal und andere, sowie langfaseriger Holzzellstoff.

Bei den Cellulosederivatfasern kann es sich um Fasern aus regenerierter Cellulose handeln.

Im folgenden wird eine Ausführungsform der erfindungsgemäßen Filtermaterialien sowie deren Herstellung detaillierter beschrieben.

Im allgemeinen umfassen die erfindungsgemäßen Filtermaterialien neben den Fasern aus einem heißsiegelfähigen Material und dem Haftvermittler mindestens eine weitere Komponente, die natürliche Fasern umfasst oder vorzugsweise aus diesen besteht.

In dieser bevorzugten Ausführungsform der vorliegenden Erfindung wird das erfindungsgemäße Filtermaterial somit aus zwei oder mehr Lagen unterschiedlicher Komponenten hergestellt, wobei mindestens eine Lage natürliche Fasern und eine Lage einen Faserblend aus Fasern aus einem heißsiegelfähigen Material und Haftvermittler enthält, wobei gilt, dass sich die mindestens zwei Lagen nach der Herstellung des Filtermaterials teilweise durchdringen können. Der Grad der Durchdringung der Lagen kann durch das Herstellungsverfahren des Filtermaterials, beispielsweise im Falle der Verwendung einer Papiermaschine durch Einstellen des Entwässerungsgrads auf dem Sieb, gesteuert werden.

Im Falle der Herstellung des erfindungsgemäßen Filtermaterials auf der Papiermaschine umfasst die zweite Lage üblicherweise einen Faserblend aus natürlichen Fasern, Fasern aus einem synthetischem Material und Haftvermittler. Dieser kann auf der Papiermaschine auf der ersten Lage aus natürlichen Fasern abgelegt und dabei sowohl miteinander als auch mit der Papierlage verschmolzen werden.

Im Falle der Herstellung des erfindungsgemäßen Filtermaterials nach dem Meltblown-Verfahren umfasst die zweite Lage üblicherweise einen Faserblend aus synthetischem Material und Haftvermittler. Dieser kann mittels Meltblown-Verfahren auf der ersten Lage aus natürlichen Fasern abgelegt und dabei sowohl miteinander als auch mit der Papierlage verschmolzen werden.

Die erste Lage des Filtermaterials hat im allgemeinen ein Flächengewicht zwischen 8 und 40 g/m², vorzugsweise von 10 bis 20 g/m² und eine Luftdurchlässigkeit von 300 bis 4000 l/m²•s (DIN ISO 9237), vorzugsweise von 500 bis 3000 l/m²•s.

Die zweite Lage des Filtermaterials hat im allgemeinen ein Flächengewicht zwischen 1 und 15 g/m², vorzugsweise von 1,5 bis 10 g/m².

Die erste Lage des Filtermaterials mit bzw. bevorzugt aus natürlichen Fasern und/oder · Celluloseregeneratfasern ist vorzugsweise nassfest ausgebildet.

Für die erste Lage mit bzw. bevorzugt aus Naturfasern und/oder Celluloseregeneratfasern werden gewöhnlich bekannte Naturfasern, wie Hanf, Manila, Jute, Sisal und andere langfaserige Holzzellstoffe sowie bevorzugt Gemische hiervon und/oder Celluloseregeneratfasern verwendet.

Die mindestens eine, zweite heißsiegelfähige Lage kann das Gemisch aus Fasern aus einem heißsiegelfähigen Material und Haftvermittler enthalten sowie daraus bestehen. Bevorzugt umfasst die zweite Lage insbesondere im Falle der Herstellung des erfindungsgemäßen Filtermaterials auf der Papiermaschine neben den obigen Bestandteilen einen weiteren Bestandteil, insbesondere Naturfasern, wobei Mischungsverhältnisse von 1/3 Naturfasern und 2/3 heißsiegelfähigen Polymerfasern besonders bevorzugt sind.

Das erfindungsgemäße Filtermaterial kann beispielsweise zur Herstellung von Teebeuteln, Kaffeebeuteln oder Tee- bzw. Kaffeefiltern verwendet werden.

Wie oben ausgeführt, kann das Verfahren zur Herstellung der erfindungsgemäßen Filtermaterialien so gesteuert werden, dass die heißsiegelfähigen Fasern der zweiten Lage die erste Lage teilweise durchdringen und die Fasern der ersten Lage, vorzugsweise die Naturfasern der ersten Lage, somit beim Trocknungsprozess beispielsweise auf der Papiermaschine im geschmolzenen Zustand umhüllen. Dabei werden jedoch die notwendigen Poren für eine Filtration freigelassen.

Im folgenden wird ein verwendbares Herstellungsverfahren anhand der Figuren am Beispiel eines zweilagigen Filtermaterials näher erläutert.

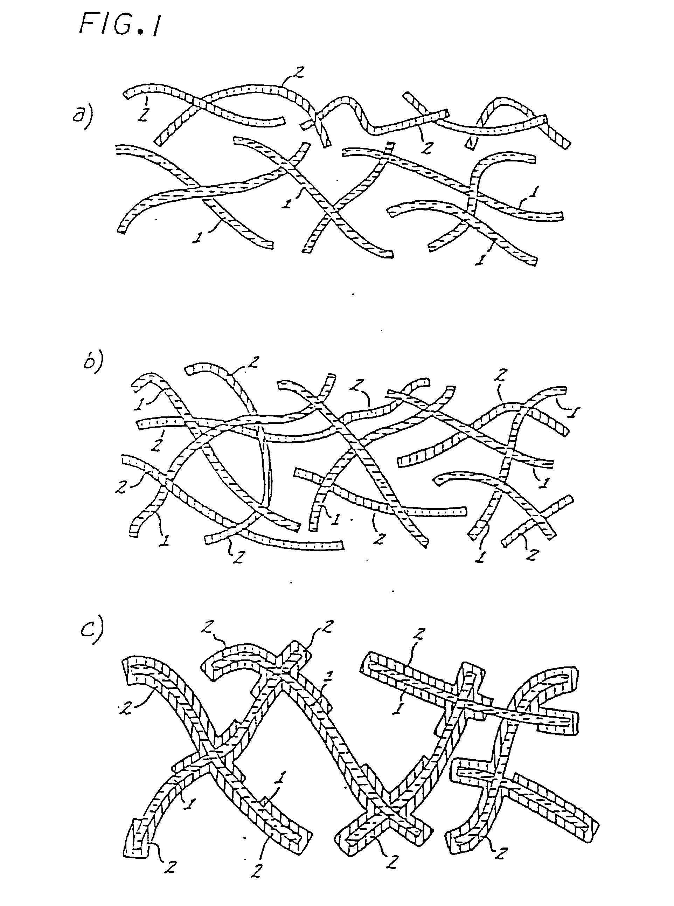

Dabei zeigt Fig. 1 die verschiedenen Stadien bei der Bildung des erfindungsgemäßen Filtermaterials aus Naturfasern und synthetischen Fasern am Beispiel der Verwendung einer Papiermaschine in einer allgemeinen, grob schematischen Darstellung.

In Fig. 1 ist in einer schematischen Darstellung die Bildung des erfindungsgemäßen Filtermaterials gezeigt. Dabei ist in Fig. la) die Bildung einer ersten Faserschicht aus Naturfasern 1 und die Bildung einer zweiten Faserschicht mit synthetischen heißsiegelfähigen Fasern 2 dargestellt. Die Bildung der zweiten Schicht mit den Fasern 2 erfolgt also durch Ablagerung über der ersten Schicht, welche durch die Naturfasern 1 gebildet ist. In der Zeichnung sind zur Unterscheidung die Naturfasern 1 waagerecht schraffiert, während die heißsiegelfähigen Fasern 2 annähernd senkrecht schraffiert wurden.

Fig. lb) zeigt, wie durch die beschriebene Entwässerung der beiden Schichten, insbesondere der zweiten Schicht mit den Fasern 2, eine teilweise Durchdringung der beiden Schichten erzielt wird, so dass die synthetischen Fasern 2 zwischen die Naturfasern 1 gelangen.

In einem weiteren Herstellungsschritt werden die einander teilweise durchdringenden Schichten 1 und 2 getrocknet und dabei derart erhitzt, dass die synthetischen Fasern 2 schmelzen und sich bei der Wiederverfestigung so um die Fasern 1 legen, dass diese zumindest teilweise umhüllt werden. Das Filtermaterial ist somit heißsiegelfähig geworden (Fig. lc).

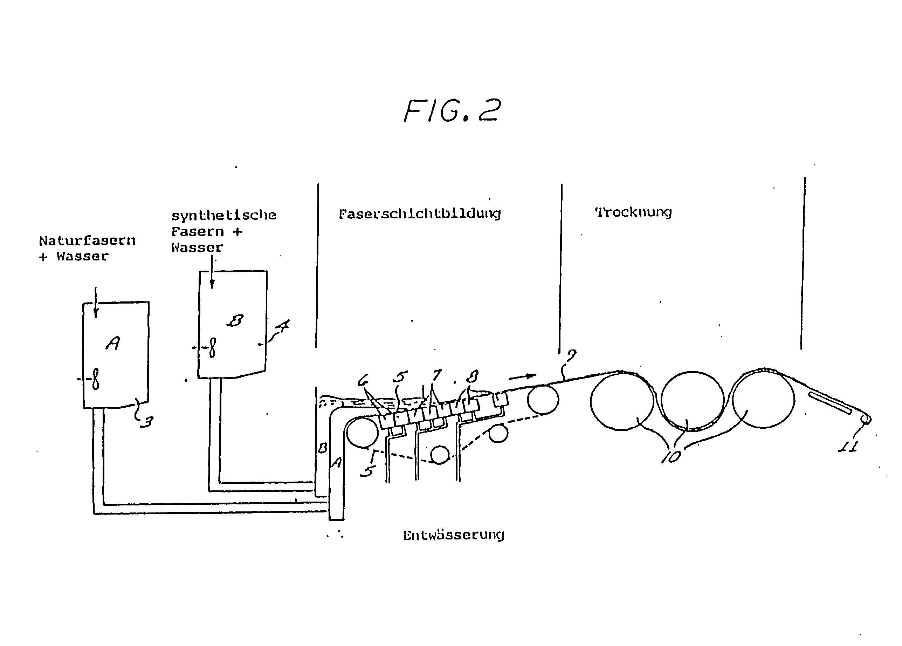

Fig. 2 zeigt den grundsätzlichen Aufbau einer Papiermaschine, wie sie zur Herstellung eines erfindungsgemäßen Filtermaterials verwendet werden kann. Zunächst wird aus den gemahlenen Naturfasern und Wasser eine Suspension "A" gebildet. Außerdem wird mit dem Faserblend aus Fasern aus einem heißsiegelfähigen Material und Haftvermittler und gegebenenfalls anderer Fasern, beispielsweise Naturfasern, sowie Wasser eine Suspension "B" hergestellt.

Diese beiden Suspensionen A und B werden aus den jeweiligen Behältern (3 und 4) über den sogenannten Stoffauflauf (head box) der Papiermaschine zugeführt. Diese besitzt im wesentlichen ein umlaufendes Sieb (5), welches über eine Anzahl von Entwässerungskammern (6, 7 und 8) hinweggeführt wird.

Über geeignete Rohrleitungen und Pumpvorrichtungen, die nicht näher dargestellt sind, wird die Suspension A auf das Sieb 5, über den ersten beiden Entwässerungskammern 6, geleitet, wobei durch die Kammern 6 und die Entwässerungsleitung das Wasser abgesaugt wird. Dabei bildet sich auf dem bewegten Sieb 5 eine erste Faserschicht aus den Naturfasern 1. Bei der Weiterbewegung des Siebes 5 über die Entwässerungskammern 7 wird die zweite Suspension B zugeführt, wobei über den Entwässerungskammern 7 die zweite Schicht aus synthetischen Fasern auf der ersten Schicht abgelagert wird. Die Entwässerung erfolgt dabei über die Entwässerungsleitung. Bei der Weiterbewegung des Siebes 5 mit den beiden aufeinanderliegenden Faserschichten wird über die Entwässerungskammern 8 eine Entwässerung vorgenommen, wodurch die beiden Schichten einander teilweise durchdringen. Durch entsprechende Einstellung der Entwässerung kann die Durchdringung mehr oder weniger stark sein.

Das nunmehr gebildete Material 9 aus Naturfasern und Polymerfasern wird von dem Sieb abgenommen und einer Trocknung zugeführt. Diese Trocknung kann auf verschiedene Art und Weise erfolgen, z. B. durch Kontakttrocknung oder Durchströmtrocknung.

Die Elemente 10 geben nur grob schematisch den Hinweis auf entsprechende Trocknungselemente.

In Fig. 2 sind 3 Trockenzylinder 10 gezeichnet, über die die geformte Papierbahn im Kontaktverfahren getrocknet wird. Es ist jedoch auch praktikabel, die gebildete Papierbahn nur über einen Zylinder zu führen und sie mit heißer Luft zu trocknen, ohne dass die Bahn auf diesem Zylinder aufliegt.

Die Erwärmung des zweilagigen Fasermaterials bringt die synthetischen Fasern 2 in der Mischschicht 9 zum Schmelzen. Bei der Wiederverfestigung am Ausgang der Trockenstation umhüllen die synthetischen Fasern zumindest teilweise die Naturfasern und das heißsiegelfähige Filtermaterial wird auf eine Rolle 11 aufgerollt.

Überraschenderweise wurde festgestellt, dass sich durch eine Wärmebehandlung die Siegelnahtfestigkeit des erfindungsgemäßen Filtermaterials weiter verbessern lässt.

In einer Ausführungsform kann die Wärmebehandlung nach der Fertigstellung des Filtermaterials im Rahmen einer zusätzlichen Wärmebehandlung erfolgen.

Für diese zusätzliche Wärmebehandlung haben sich Temperaturen von 150 bis 200 °C, vorzugsweise 150 bis 175 °C als günstig erwiesen. Üblicherweise wird eine solche Wärmebehandlung während einer Dauer von 1 bis 10 min, vorzugsweise 2 bis 5 min durchgeführt.

Es ist jedoch auch möglich, die Siegelnahtfestigkeit des erfindungsgemäßen Filtermaterials durch eine Erhöhung der Temperatur in der Trockenstation (beispielsweise der Trockenzylinder oder des Durchströmtrockners) im Rahmen einer Herstellung auf der Papiermaschine zu verbessern.

Das erfindungsgemäße Filtermaterial kann ferner nach dem Meltblown-Verfahren, wie im folgenden für ein zweilagiges Filtermaterial beschrieben, hergestellt werden:

Falls das die zweite Lage bildende Gemisch aus Polymer und Haftvermittler als Granulat vorliegt, kann es mit Hilfe des Melt-Blown (schmelzgeblasene Fasern)-Verfahrens zu Fasern geformt und im noch heißen klebenden Zustand auf eine Unterlage, z. B. ein Papier aus Naturfasern, abgelegt werden.

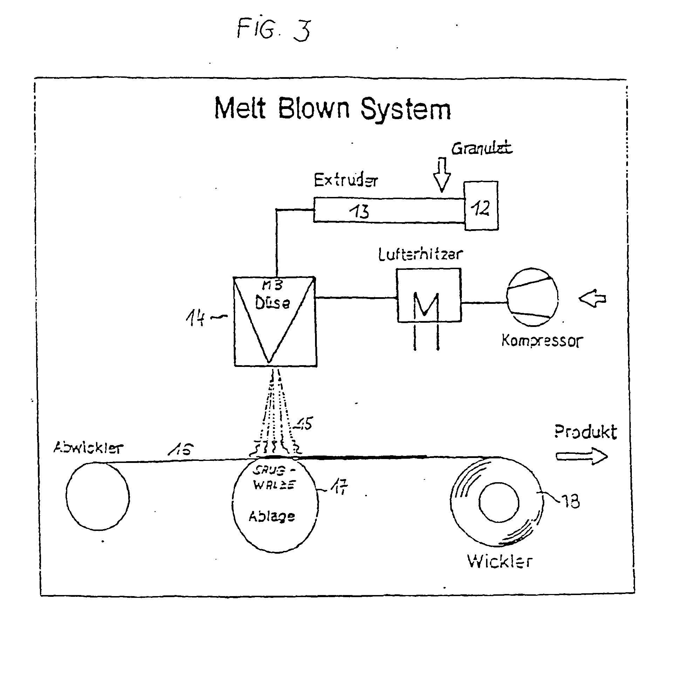

Dieser Prozess gehört zum Stand der Technik (siehe beispielsweise EP-A-0 656 224, DE-A-197 19 807), aber es soll trotzdem kurz auf die Grundlagen des in Fig. 3 dargestellten Verfahrens eingegangen werden:

Das getrocknete Granulat 12 wird in einen Extruder 13 transportiert, in dem es geschmolzen und auf die nötige Temperatur aufgeheizt wird, die für die Faserbildung nötig ist. Dieses geschmolzene und aufgeheizte Gemisch erreicht dann die MB-Düse 14. Diese Düse hat eine hohe Anzahl von kleinen Öffnungen, durch die das geschmolzene Polymergemisch gedrückt und zu Fasern gezogen wird. Diese Fasern 15 werden direkt unterhalb dieser Düse von einem starken Luftstrom erfasst, weiter verstreckt, in unterschiedliche Längen zerrissen und auf einer Unterlage, z. B. ein Papier aus Naturfasern 16, das auf einer Saugwalze 17 liegt, abgelegt. Da diese Fasern noch im heißen, klebrigen Zustand sind, verkleben sie mit den Naturfasern des Papiers. Anschließend wird das Material im erkalteten Zustand auf dem Wickler 18 aufgerollt. Die typischen Durchmesser dieser schmelzgeblasenen Fasern liegen zwischen 2 und 7 µm. Die Fig. 3 ist eine schematische Darstellung des Meltblown-Verfahrens.

Im folgenden wird die vorliegende Erfindung anhand von Beispielen detaillierter beschrieben. Es ist jedoch selbstverständlich, dass diese Beispiele die vorliegende Erfindung in keiner Weise einschränken.

### Beispiel 1:

Zu einem im Handel erhältlichen Polypropylen (PP)-Granulat (Handelsname Borealis 400, Fa. Borealis, Frankreich) wurden 5 % eines im Handel erhältlichen Polypropylens mit einem Gehalt an funktionellen Maleinsäureanhydridgruppen (MSA) von 0,5 % (Handelsname Polybond 3150, Fa. Velox, Deutschland) zugegeben.

Die Ausgangsmaterialien wurden mithilfe des Melt-Blown (schmelzgeblasene Fasern)-Verfahrens wie oben allgemein beschrieben zu Fasern geformt, und im noch heißen klebenden Zustand auf ein Vlies von Naturfasern abgelegt.

Die typischen Durchmesser der erhaltenen schmelzgeblasenen Fasern liegen zwischen 2 und 7 µm.

Ergebnisse:
1. 95 % PP-Fasern und 5 % Polypropylen mit 0,5 % Maleinsäureanhydridgruppen.
   Vlies 17,0 g/m² (mit 3,5 g/m² Polymer und 13,5 g/m² Naturfaser)
   - Siegelnahtfestigkeit:: Längsrichtung = 2,60 N/15mm
   Querrichtung = 2,08 N/15mm
2. 100 % PP-Fasern
   Vlies 17,0 g/m² (mit 3,5 g/m² PP und 13,5 g/m² Naturfasern)
   - Siegelnahtfestigkeit:: Längsrichtung = 1,48 N/15mm
   Querrichtung = 1,32 N/15mm

### Messmethode der Siegelnahtfestigkeit (nach Brugger):

Zwei 15 mm breite Streifen werden mit der Polymer-Heißsiegelschicht gegeneinander mit folgenden Parametern versiegelt:
Temperatur: 210 °C; Zeit: 0,5 sec.; Druck: 36,2 psi.
Danach wird mit einem handelsüblichen INSTRON-Gerät die Kraft pro 15mm Streifenbreite bei einer Abzugsgeschwindigkeit von 20 mm pro min. bis zum Bruch (Lösen der Siegelnaht) ermittelt.

### Beispiel 2:

Auf einer Pilotanlage mit einem Schrägsieb zur Herstellung von Filterpapieren wurde wie oben allgemein beschrieben ein 18 g/m² heißsiegelfähiges Filtermaterial mit PP-Fasern und Polypropylenhaftvermittler mit Maleinsäureanhydridgruppen (mit 1 % MSA) hergestellt.

Als Vergleich dient ein ebenfalls 18 g/m² heißsiegelfähiges Filtermaterial nur mit handelsüblichen PP-Fasern.

### Beschreibung der Pilotanlage:

Die Anlage hat 2 Stoffaufläufe, einen für die Naturfaserlage, und einen für die heißsiegelnde Polymerlage. Auf einem Schrägsieb wird das 2-lagige Filtermaterial gebildet, entwässert und anschließend auf einem Trockenzylinder bei 150 - 170 °C getrocknet, und dann aufgerollt.

Die Maschinengeschwindigkeit beträgt 5 m/min bei einer Papierbreite von ca. 40 cm.

Ergebnisse 1. Muster:
1. Heißsiegelschicht: 93 % PP-Fasern und 7 % des obigen Haftvermittlers mit 1 % MSA entspricht 4,4 g/m².
   - Nadelholzzellstoff:: 1,6 g/m² insgesamt 6 g/m²
2. Grundschicht 8,3 g/m² Nadelholzzellstoff und 3,7 g/m² Zelluloseregeneratfaser. insgesamt 12 g/m²
   - gesamtes Gewicht des Filtermaterials:: 18 g/m²
   - Siegelnahtfestigkeit: Längsrichtung:: 2,51 N/15mm

### Ergebnisse 2. Muster:

1. Heißsiegelschicht: 100 % PP-Fasern, handelsüblich entspricht 4,4 g/m² (Fasertiter: 2,2 dtex. Faserlänge 2,2 mm)
   - Nadelholzzellstoff: 1,6 g/m²: insgesamt 6 g/m²
2. Grundschicht: Fasern wie oben
   Siegelnahtfestigkeit: Längsrichtung: 1,97 N/15mm

Beide Muster des Filtermaterials sind nassfest ausgerüstet.

Die Siegelnahtfestigkeit dieser Muster wurde mit dem RDM Gerät bestimmt.

### Messmethode der Siegelnahtfestigkeit (nach RDM):

Zwei 15 mm breite Streifen werden mit der Polymer-Heißsiegelschicht gegeneinander mit folgenden Parametern versiegelt:
Temperatur: 210 °C; Zeit: 0,5 sec.; Druck: 43,5 psi.
Danach wird mit einem handelsüblichen INSTRON-Gerät die Kraft pro 15 mm Streifenbreite bei einer Abzugsgeschwindigkeit von 20 mm pro min. bis zum Bruch (Lösen der Siegelnaht) ermittelt.

### Beispiel 3:

Das Filtermaterial mit den 93 % PP-Fasern und 7 % des obigen Haftvermittlers mit 1 % MSA (Muster 1) sowie das Filtermaterial mit den handelsüblichen 100 % PP-Fasern (Muster 2) wurden nach der Fertigstellung einer zusätzlichen Wärmebehandlung bei einer Temperatur von 150 °C und 175 °C in einem Trockenofen unterzogen.
Dauer 5 min.
Danach wurde die Siegelnahtfestigkeit erneut nach der oben beschriebenen Methode gemessen.

### Ergebnisse:

| | |
|---|---|
| Muster 1 | 150 °C / 5 min.: 3,46 N/15mm |
| | 175 °C / 5 min.: 3,95 N/15mm |
| | |
| Muster 2 | 150 °C / 5 min.: 2,23 N/15mm |
| | 175 °C / 5 min.: 2,32 N/15mm |

Überraschenderweise wurde festgestellt, dass das Muster 1 mit dem Haftvermittler-Zusatz eine stärkere Zunahme der Siegelnahtfestigkeit erfährt, als das Muster 2 ohne Haftvermittler-Zusatz, es bleibt in etwa innerhalb des Streubereiches gleich.

Das legt die Schlussfolgerung nahe, dass sich bei dem herkömmlichen Papierherstellungsverfahren durch eine zusätzliche Wärmebehandlung die Siegelnahtfestigkeit des erfindungsgemäßen Vlies verbessern lässt.

### Beispiel 4:

Auf einer dafür geeigneten Papiermaschine werden wie oben beschrieben Filtermaterialien hergestellt.

### Ergebnisse:

### 1. Muster

| | |
|---|---|
| - Heißsiegelschicht: | 33,3 % PP-Fasern mit 7 % des obigen Haftvermitt- |
| | lers mit 1 % MSA |
| | 33,6 % Synthetischer Pulp aus PP |
| | 33,1 % Nadelholzfasern. |
| | |
| | entspricht: 7,4 g/m² |
| | |
| - Grundschicht | 63,6 % Nadelholzfasern |
| | 36,4 % Celluloseregeneratfasern |
| | |
| | entspricht: 9,0 g/m² |
| | |
| Gesamtgewicht des Musters 1 | 16,4 g/m² |
| | |
| Siegelnahtfestigkeit in Längsrichtung | 2,2 N/15mm |
| Siegelnahtfestigkeit in Querrichtung | 1,8 N/15mm |

### 2. Muster

| | |
|---|---|
| - Heißsiegelschicht | 33,3 % PP-Fasern handelsüblich 2,2 dtex/4,6 mm |
| | 33,6 % Synthetischer Pulp aus PP |
| | 33,1 % Nadelholzfasern. |
| | |
| | entspricht: 7,4 g/m² |
| | |
| - Grundschicht | 63,6 % Nadelholzfasern |
| | 36,4 % Celluloseregeneratfasern |
| | |
| entspricht | 9,0 g/m² |
| | |
| Gesamtgewicht des Musters 2 | 16,4 g/m² |
| | |
| Siegelnahtfestigkeit in Längsrichtung | 2,0 N/15mm |
| Siegelnahtfestigkeit in Querrichtung | 1,5 N/15mm |

Bei Muster 1 und Muster 2 betrug die Geschwindigkeit der Papiermaschine 290 m/min.

Durch diesen Versuch wurde auch wieder bestätigt, dass durch eine Zugabe eines Haftvermittlers die Siegelnahtfestigkeit zunimmt (Muster 1).

Eine mikroskopische Prüfung der gesiegelten und anschließend gerissenen 15 mm breiten Streifen des Musters 1 (siehe Messmethode nach Brugger), zeigte überraschenderweise, dass sich nicht die versiegelte Polymerschicht voneinander löste, so wie es bei Muster 2 ohne Haftvermittler war, sondern dass das Papier gerissen war.

Dies ist wiederum eine Bestätigung, dass durch den Einsatz eines Haftvermittlers die Siegelnahtfestigkeit der erfindungsgemäßen Filtermaterialien deutlich verbessert wird.

## Patentansprüche

1. Filtermaterial, das mindestens eine erste, nicht heisssiegelfähige Lage und mindestens eine zweite, heisssiegelfähige, Fasern aus synthetischem Material umfassende Lage, die einen Haftvermittler enthält, umfasst, wobei es sich bei dem Haftvermittler um ein Polypropylen mit aufgepfropften funktionellen Maleinsäureanhydridgruppen handelt.

2. Filtermaterial gemäss Anspruch 1, wobei der Haftvermittler in dem Filtermaterial in einer Menge von 2 bis 25 Gew.-%, bezogen auf das Gewicht der mindestens einen heisssiegelfähigen, Fasern aus synthetischem Material umfassenden Lage, vorhanden ist.

3. Filtermaterial gemäss Anspruch 1 oder 2, wobei die mindestens eine zweite, heisssiegelfähige, Fasern aus synthetischem Material umfassende Lage aus Polypropylen, Polyethylen, Vinylchlorid/Vinylacetat-Copolymer oder Polyester besteht.

4. Filtermaterial nach einem der Ansprüche 1 bis 3, wobei die erste, nicht heisssiegelfähige Lage aus Naturfasern besteht und nassfest ausgebildet ist.

5. Filtermaterial nach einem der Ansprüche 1 bis 4, wobei die erste, nicht heisssiegelfähige Lage ein Flächengewicht zwischen 8 und 40 g/m² und eine Luftdurchlässigkeit von 300 bis 4000 1/m²•s (DIN ISO 9237) aufweist.

6. Filtermaterial gemäss einem der Ansprüche 1 bis 5, wobei die mindestens eine zweite, heisssiegelfähige Lage ein Flächengewicht von 1 bis 15 g/m² aufweist.

7. Verfahren zur Herstellung eines eine erste, nicht heisssiegelfähige Lage und eine heisssiegelfähige Lage umfassendes Filtermaterials, **dadurch gekennzeichnet, dass** im Rahmen eines Nasslegeverfahrens unter Mitverwendung eines Haftvermittlers in einer Menge von 2 bis 25 Gew.-%, bezogen auf das Gewicht der mindestens einen heisssiegelfähigen, Fasern aus synthetischem Material umfassenden Lage, das Filtermaterial hergestellt wird, wobei es sich bei dem Haftvermittler um ein Polypropylen mit aufgepfropften funktionellen Maleinsäureanhydridgruppen handelt.

8. Verfahren nach Anspruch 7, wobei eine anschliessende Trocknung bei Temperaturen von 150 bis 200°C durchgeführt wird.

9. Verfahren zur Herstellung eines eine erste, nicht heisssiegelfähige Lage und eine heisssiegelfähige Lage umfassendes Filtermaterials, **dadurch gekennzeichnet, dass** im Rahmen eines Meltblown-Verfahrens ein Blend aus Fasern eines heisssiegelfähigen Materials und einem Haftvermittler in einer Menge von 2 bis 25 Gew.-%, bezogen auf das Gewicht der mindestens einen heisssiegelfähigen, Fasern aus synthetischem Material umfassenden Lage, auf der ersten Lage üblicherweise aus natürlichen Fasern abgelegt wird, wobei es sich bei dem Haftvermittler um ein Polypropylen mit aufgepfropften funktionellen Maleinsäureanhydridgruppen handelt.

10. Verwendung des Filtermaterials nach einem der Ansprüche 1 bis 6 zur Herstellung von Teebeuteln, Kaffeebeuteln oder Tee- bzw. Kaffeefiltern.

## Claims

1. Filter material comprising at least one first not heat-sealable sheet and at least one second heat-sealable sheet comprising fibres of a synthetic material and containing an adhesive, wherein the adhesive is a polypropylene having grafted functional maleic anhydride groups.

2. Filter material according to claim 1, wherein the adhesive is present in the filter material in an amount of from 2 to 25 % by weight based on the weight of the at least one heat-sealable sheet comprising fibres of a synthetic material.

3. Filter material according to claim 1 or 2, wherein the at least one second heat-sealable sheet comprising fibres of a synthetic material is made of polypropylene, polyethylene, vinyl chloride/vinyl acetate copolymer or polyester.

4. Filter material according to anyone of claims 1 to 3, wherein the first, not heat-sealable sheet is made of natural fibres and is provided with wet-strength.

5. Filter material according to anyone of claims 1 to 4, wherein the first, not heat-sealable sheet has a basis weight of between 8 and 40 g/m² and an air permeability of from 300 to 4000 l/m²·s (DIN ISO 9237).

6. Filter material according to anyone of claims 1 to 5, wherein the at least one second, heat-sealable sheet has a basis weight of from 1 to 15 g/m².

7. Process for producing a filter material comprising a first, not heat-sealable sheet and a heat-sealable sheet, **characterized in that** the filter material is produced in the course of a wet-laying process with concomitant use of an adhesive in an amount of from 2 to 25 % by weight based on the weight of the at least one heat-sealable sheet comprising fibres of a synthetic material, wherein the adhesive is a polypropylene having grafted functional maleic anhydride groups.

8. Process according to claim 7, wherein a subsequent drying is performed at temperatures of from 150 to 200 °C.

9. Process for producing a filter material comprising a first, not heat-sealable sheet and a heat-sealable sheet, **characterized in that** in the course of a meltblown process a blend of fibres of a heat-sealable material and an adhesive in an amount of from 2 to 25 % by weight based on the weight of the at least one heat-sealable sheet comprising fibres of a synthetic material, is laid down onto the first sheet commonly of natural fibres, wherein the adhesive is a polypropylene having grafted functional maleic anhydride groups.

10. Use of the filter material according to anyone of claims 1 to 6 for producing teabags, coffee bags or tea and coffee filters, respectively.

## Revendications

1. Matériau filtrant, qui comprend au moins une première couche non thermoscellable et au moins une deuxième couche thermoscellable, comprenant des fibres en matériau synthétique, qui contient un agent adhésif, ledit agent adhésif étant un polypropylène ayant des groupes anhydride d'acide maléique fonctionnels greffés

2. Matériau filtrant selon la revendication 1, dans lequel l'agent adhésif est présent dans le matériau filtrant en une quantité allant de 2 à 25% en poids, ramenée au poids de ladite au moins une couche thermoscellable comprenant des fibres en matériau synthétique.

3. Matériau filtrant selon la revendication 1 ou 2, dans lequel ladite au moins une deuxième couche thermoscellable comprenant des fibres en matériau synthétique est en polypropylène, en polyéthylène, en copolymère chlorure de vinyle/acétate de vinyle ou en polyester.

4. Matériau filtrant selon l'une des revendications 1 à 3, dans lequel la première couche non thermoscellable est constituée de fibres naturelles et présente une structure résistant à l'humidité.

5. Matériau filtrant selon l'une des revendications 1 à 4, dans lequel la première couche non thermoscellable présente un grammage dans la plage entre 8 et 40 g/m² et une perméabilité à l'air de 300 à 4000 l/m²·s (DIN ISO 9237).

6. Matériau filtrant selon l'une des revendications 1 à 5, dans lequel ladite au moins une deuxième couche thermoscellable présente un grammage dans la plage de 1 à 15 g/m².

7. Procédé de fabrication d'un matériau filtrant comprenant une première couche non thermoscellable et une couche thermoscellable, **caractérisé en ce que** le matériau filtrant est fabriqué dans le cadre d'un procédé par voie humide avec utilisation concomitante d'un agent adhésif en une quantité allant de 2 à 25% en poids, ramenée au poids de ladite au moins une couche thermoscellable comprenant des fibres en matériau synthétique, l'agent adhésif étant un polypropylène ayant des groupes anhydride d'acide maléique fonctionnels greffés.

8. Procédé selon la revendication 7, dans lequel un séchage est ensuite effectué à des températures allant de 150 à 200 °C.

9. Procédé de fabrication d'un matériau filtrant comprenant une première couche non thermoscellable et une couche thermoscellable, **caractérisé en ce que**, dans le cadre d'un procédé d'extrusion-soufflage, un mélange de fibres d'un matériau thermoscellable et d'un agent adhésif en une quantité allant de 2 à 25% en poids, ramenée au poids de ladite au moins une couche thermoscellable comprenant des fibres en matériau synthétique, est appliqué sur la première couche généralement en fibres naturelles, l'agent adhésif étant un polypropylène ayant des groupes anhydride d'acide maléique fonctionnels greffés.

10. Utilisation du matériau filtrant selon l'une des revendications 1 à 6 pour fabriquer des sachets pour le thé, des sachets pour le café ou des filtres à thé ou à café.
